# EUROPEAN PATENT SPECIFICATION

(11) **EP 4 120 541 B1**
(45) Date of publication and mention of the grant of the patent: **29.10.2025**
(21) Application number: 21767286.4
(22) Date of filing: 03.03.2021
(51) Int. Cl.: H02M 7/48

(54) **ABNORMALITY DETECTION DEVICE, ABNORMALITY DETECTION METHOD, PROGRAM, INDOOR WIRING SYSTEM, POWER CONDITIONER, BREAKER, SOLAR PANEL, SOLAR PANEL ACCESSORY MODULE, AND JUNCTION BOX**
ANOMALIEERKENNUNGSVORRICHTUNG, ANOMALIEERKENNUNGSVERFAHREN, PROGRAMM, INNENRAUMVERKABELUNGSSYSTEM, LEISTUNGSKONDITIONIERER, UNTERBRECHER, SOLARPANEEL, SOLARPANEELZUBEHÖRMODUL UND ANSCHLUSSDOSE
DISPOSITIF ET PROCÉDÉ DE DÉTECTION D'ANOMALIE, PROGRAMME, SYSTÈME DE CÂBLAGE INTÉRIEUR, CONDITIONNEUR D'ÉNERGIE, DISJONCTEUR, PANNEAU SOLAIRE, MODULE ACCESSOIRE DE PANNEAU SOLAIRE ET BOÎTE DE JONCTION

(30) Priority: 11.03.2020 JP 2020041739
(43) Date of publication of application: 18.01.2023
(73) Proprietor: Panasonic Intellectual Property Management Co., Ltd., Osaka-shi, Osaka 540-6207 (JP)
(72) Inventor: KOGA, Tatsuo, Osaka-shi, Osaka 540-6207 (JP); KIDERA, Kazunori, Osaka-shi, Osaka 540-6207 (JP); KANAMORI, Keita, Osaka-shi, Osaka 540-6207 (JP)
(74) Representative: Appelt, Christian W.
(86) International application number: PCT/JP2021/008296
(87) International publication number: WO 2021/182262

(56) References cited:
- JP-A- 2008 042 999
- JP-A- 2016 001 948
- JP-A- 2019 118 212

## Description

### [Technical Field]

The present invention relates to anomaly detection devices, anomaly detection methods, programs, indoor wiring systems, solar inverters, circuit breakers, solar panels, solar panel attachment modules, and junction boxes.

### [Background Art]

Conventionally, there is a known system that converts direct-current power supplied thereto from a photovoltaic (PV) panel (solar panel) or the like via wiring into alternating-current power using devices such as an inverter. A report indicates that such wiring connecting a direct-current power supply and a device is damaged or ruptured due to an external factor, degradation over time, or the like. There are cases where an anomaly such as an electric arc (i.e., arc discharge) occurs due to damage or the like of such wiring. Thus, a detection means for detecting an anomaly such as an electric arc in wiring has been proposed (for example, JP 2011-007765 A).
JP 2019-118212 A discloses a control command system including a communication unit that communicates with a power conversion device connected to a power storage device, a solar power generation device, and a power system, a notification unit 25 that notifies a user of an abnormality in the power storage device when an abnormality detection report about the power storage device is received from the power conversion device.
JP 2008-042999 A discloses a power supply device including a power supply board, inside which a DC system functional unit, a DC feed path that supplies electric power to the DC system functional unit, and a power conversion unit which generates DC power based on commercial AC power source and supplies the DC power to the DC feed patch are stored, a battery unit that fills power shortage if electric power supplied from the DC feed path to the DC system functional unit becomes short, and a power generation means that charges the battery unit.

### [Summary of Invention]

### [Technical Problem]

However, in JP 2011-007765 A, a voltage detection means for measuring a voltage in wiring and an electric current detection means for measuring an electric current in wiring need to be provided as the means for detecting an anomaly in wiring, which leads to increased size and cost of the system.

Thus, the present invention provides an anomaly detection device, etc., capable of easily detecting an anomaly in wiring.

### [Solution to Problem]

The present invention is defined by the attached independent claims. Other preferred embodiments may be found in the dependent claims. The present application discloses an anomaly detection device (10) comprising:a determiner (11) that determines whether a communication connection via a communication line connecting a device and a voltage converter including a communication function has been lost; and an outputter (12) that outputs an anomalous signal when it is determined that the communication connection has been lost,wherein the anomaly detection device (10) is characterized in that the device and the voltage converter regularly transmit and receive heartbeats for confirming that the communication connection between the device and the voltage converter is valid, and the determiner (11) determines that the communication connection has been lost when the voltage converter notifies of a failure to regularly receive heartbeats from the device. The present application discloses an anomaly detection method comprising:determining whether a communication connection via a communication line connecting a device and a voltage converter including a communication function has been lost; and outputting an anomalous signal when it is determined that the communication connection has been lost,wherein the method is characterized in that the device and the voltage converter regularly transmit and receive heartbeats for confirming that the communication connection between the device and the voltage converter is valid, and the determining includes determining that the communication connection has been lost when the voltage converter notifies of a failure to regularly receive heartbeats from the device.

### [Brief Description of Drawings]

[FIG. 1]

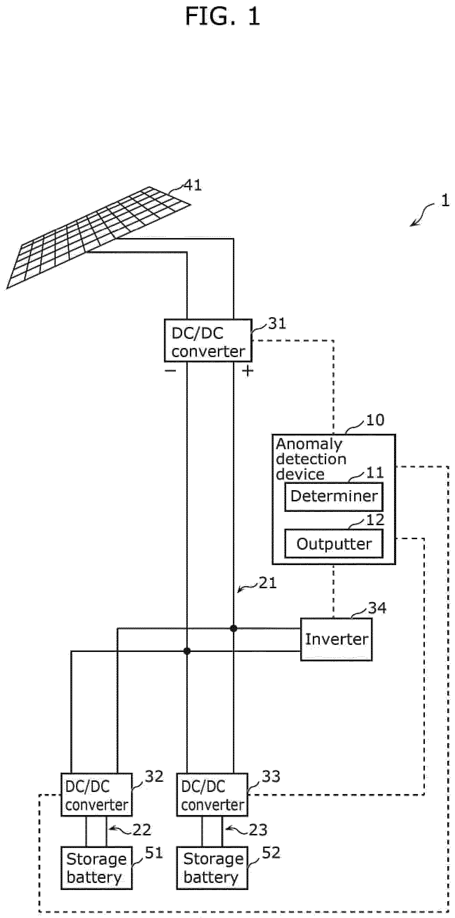

   FIG. 1 is a configuration diagram illustrating one example of a solar power generation system according to Embodiment 1.
[FIG. 2]

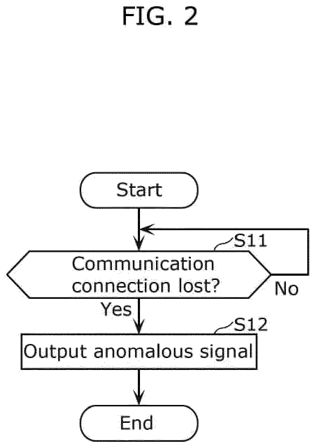

   FIG. 2 is a flowchart illustrating one example of the operation of an anomaly detection device according to Embodiment 1.
[FIG. 3]

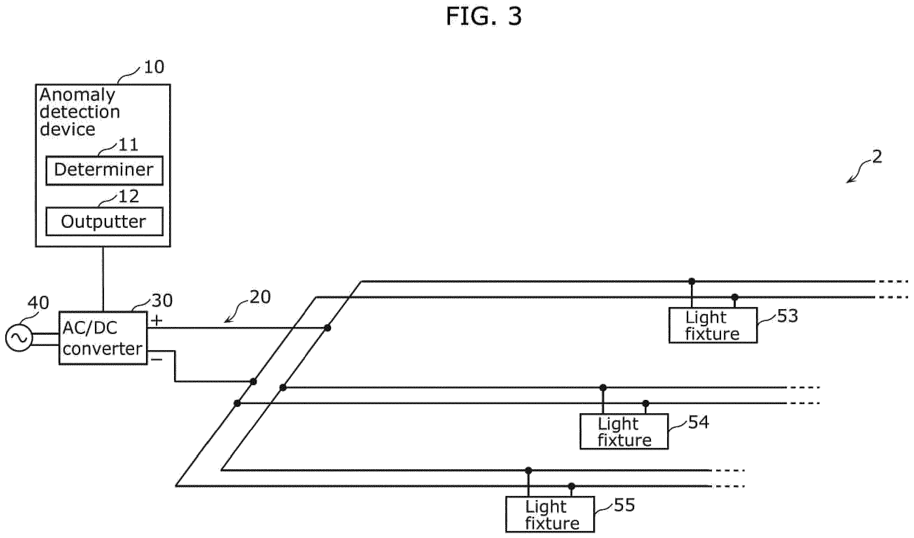

   FIG. 3 is a configuration diagram illustrating one example of an indoor wiring system according to Embodiment 2.
[FIG. 4]

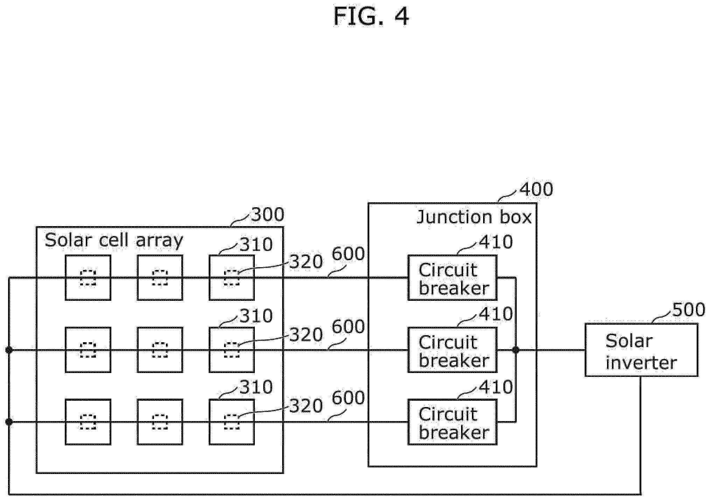

   FIG. 4 is a diagram for describing an example of application of an anomaly detection device according to the present invention.

### [Description of Embodiments]

Hereinafter, embodiments of the present invention will be described with reference to the Drawings. Note that each embodiment described below shows a specific example of the present invention. Therefore, the numerical values, shapes, materials, structural elements, the arrangement and connection of the structural elements, steps, the processing order of the steps, etc. shown in the following embodiments are mere examples and are not intended to limit the present invention.

Note that the figures are schematic diagrams and are not necessarily precise illustrations. In the figures, substantially identical elements are assigned the same reference signs, and overlapping description is omitted or simplified.

### [Embodiment 1]

FIG. 1 is a configuration diagram illustrating one example of solar power generation system 1 according to Embodiment 1.

Solar power generation system 1 includes solar panel 41, storage batteries 51, 52, DC/DC converters 31, 32, 33, inverter 34, and anomaly detection device 10.

Solar panel 41 generates direct-current power by generating electric power using sunlight. The direct-current power generated by solar panel 41 is supplied to DC/DC converter 31.

Storage battery 51 stores the direct-current power received from DC/DC converter 32, and storage battery 52 stores the direct-current power received from DC/DC converter 33. For example, storage batteries 51, 52 may be installed in an electric vehicle, an electric bicycle, or the like, or may be used to supply electric power to home appliances and the like.

DC/DC converters 31, 32, 33 are voltage converters that increase or decrease the direct-current voltage of the direct-current power supplied thereto. The voltage conversion function of DC/DC converters 31, 32, 33 is implemented using a capacitor, a coil, and a semiconductor switch, for example.

DC/DC converter 31 increases or decreases the voltage of the direct-current power supplied thereto from solar panel 41 and outputs the direct-current power to DC/DC converters 32, 33 and inverter 34. DC/DC converter 31 includes a positive electrode and a negative electrode; a positive electrode-side direct-current power line is connected to the positive electrode, and a negative electrode-side direct-current power line is connected to the negative electrode. This positive electrode-side direct-current power line and this negative electrode-side direct-current power line are collectively referred to as wiring 21. Wiring 21 extends from DC/DC converter 31 and branches toward DC/DC converters 32, 33 and inverter 34, for example. The direct-current power is supplied from DC/DC converter 31 to DC/DC converters 32, 33 and inverter 34 through wiring 21. For example, DC/DC converter 31 includes a semiconductor switch that turns ON and OFF the supply of electric power to DC/DC converters 32, 33 and inverter 34 through wiring 21.

DC/DC converter 31 is one example of the voltage converter including a communication function. Each of DC/DC converters 32, 33 and inverter 34 is one example of the device that communicates with DC/DC converter 31. The communication connection between DC/DC converter 31 and each of DC/DC converters 32, 33 and inverter 34 is performed through a communication line. Wiring 21 is one example of the communication line. As described above, wiring 21 is a direct-current power line, and the communication line also functions as a direct-current power line that connects DC/DC converter 31 and each of DC/DC converters 32, 33 and inverter 34. For example, DC/DC converter 31 communicates with each of DC/DC converters 32, 33 and inverter 34 by way of power-line communication (PLC) or power over Ethernet (registered trademark) (PoE) using wiring 21 functioning as both the communication line and the direct-current power line.

DC/DC converter 32 increases or decreases the voltage of the direct-current power supplied thereto from DC/DC converter 31 and outputs the direct-current power to storage battery 51. DC/DC converter 32 includes a positive electrode and a negative electrode; a positive electrode-side direct-current power line is connected to the positive electrode, and a negative electrode-side direct-current power line is connected to the negative electrode. This positive electrode-side direct-current power line and this negative electrode-side direct-current power line are collectively referred to as wiring 22. The direct-current power is supplied from DC/DC converter 32 to storage battery 51 through wiring 22. For example, DC/DC converter 32 includes a semiconductor switch that turns ON and OFF the supply of electric power to storage battery 51 through wiring 22.

DC/DC converter 32 is one example of the voltage converter including a communication function. In other words, DC/DC converter 32 is a device that communicates with DC/DC converter 31, which is a voltage converter, as well as being a voltage converter. Storage battery 51 is one example of the device that communicates with DC/DC converter 32. The communication connection between DC/DC converter 32 and storage battery 51 is performed through a communication line. Wiring 22 is one example of the communication line. As described above, wiring 22 is a direct-current power line, and the communication line also functions as a direct-current power line that connects DC/DC converter 32 and storage battery 51. For example, DC/DC converter 32 and storage battery 51 communicate with each other by way of PLC or PoE using wiring 22 functioning as both the communication line and the direct-current power line.

DC/DC converter 33 increases or decreases the voltage of the direct-current power supplied thereto from DC/DC converter 31 and outputs the direct-current power to storage battery 52. DC/DC converter 33 includes a positive electrode and a negative electrode; a positive electrode-side direct-current power line is connected to the positive electrode, and a negative electrode-side direct-current power line is connected to the negative electrode. This positive electrode-side direct-current power line and this negative electrode-side direct-current power line are collectively referred to as wiring 23. The direct-current power is supplied from DC/DC converter 33 to storage battery 52 through wiring 23. For example, DC/DC converter 33 includes a semiconductor switch that turns ON and OFF the supply of electric power to storage battery 52 through wiring 23.

DC/DC converter 33 is one example of the voltage converter including a communication function. In other words, DC/DC converter 33 is a device that communicates with DC/DC converter 31, which is a voltage converter, as well as being a voltage converter. Storage battery 52 is one example of the device that communicates with DC/DC converter 33. The communication connection between DC/DC converter 33 and storage battery 52 is performed through a communication line. Wiring 23 is one example of the communication line. As described above, wiring 23 is a direct-current power line, and the communication line also functions as a direct-current power line that connects DC/DC converter 33 and storage battery 52. For example, DC/DC converter 33 and storage battery 52 communicate with each other by way of PLC or PoE using wiring 23 functioning as both the communication line and the direct-current power line.

Inverter 34 converts, into alternating-current power, the direct-current power supplied thereto from DC/DC converter 31 and outputs the alternating-current power. Inverter 34, which uses the maximum power point tracking (MPPT) technology, for example, adjusts the electric current and the voltage of the direct-current power supplied thereto from DC/DC converter 31 so as to have values that maximize the electric power. For example, inverter 34 converts the direct-current power into alternating-current power having a voltage of 100 V and a frequency of 50 Hz or 60 Hz. This alternating-current power is used in home appliances and the like.

For example, when the electric current detection means, the voltage detection means, or the like is provided in wiring, an anomaly (for example, damage or rupture) in the wiring can be detected, but providing the electric current detection means, the voltage detection means, or the like leads to increased size and cost of the system.

Thus, anomaly detection device 10 is used in order to easily detect an anomaly in the wiring. Anomaly detection device 10 is, for example, a microcomputer. The microcomputer is a semiconductor integrated circuit or the like including read-only memory (ROM) and random-access memory (RAM) each having a program stored therein, a processor (a central processing unit) (CPU) that executes the program, a timer, an A/D converter, a D/A converter, and the like. Note that anomaly detection device 10 may be provided as hardware using a dedicated electronic circuit including an A/D converter, a logical circuit, a gate array, a D/A converter, and the like. Anomaly detection device 10 is connected to DC/DC converters 31, 32, 33 and inverter 34, for example, via wired or wireless connection so as to allow communication therebetween; anomaly detection device 10 can receive notifications from DC/DC converters 31, 32, 33 and inverter 34.

Anomaly detection device 10 includes determiner 11 and outputter 12. Determiner 11 and outputter 12 are each implemented by the processor executing the program stored in the memory. The operations of determiner 11 and outputter 12 will be described with reference to FIG. 2.

FIG. 2 is a flowchart illustrating one example of the operation of anomaly detection device 10 according to Embodiment 1.

Determiner 11 determines whether the communication connection via the communication line connecting the device and the voltage converter including the communication function has been lost (Step S11). For example, DC/DC converter 31 and DC/DC converter 32 regularly transmit and receive heartbeats for confirming that the communication connection between DC/DC converter 31 and DC/DC converter 32 is valid. Similarly, for example, DC/DC converters 31, 33 transmit and receive heartbeats, DC/DC converter 31 and inverter 34 transmit and receive heartbeats, DC/DC converter 32 and storage battery 51 transmit and receive heartbeats, and DC/DC converter 33 and storage battery 52 transmit and receive heartbeats. For example, when DC/DC converters 31, 32, 33 and inverter 34 fail to regularly receive heartbeats from the corresponding communication partners, DC/DC converters 31, 32, 33 and inverter 34 notify anomaly detection device 10 of this failure. With this, determiner 11 can determine whether the communication connection via the communication line connecting the device and the voltage converter including the communication function has been lost. For example, when anomaly detection device 10 is notified by DC/DC converter 32 of the failure to regularly receive heartbeats from storage battery 51, anomaly detection device 10 can determine that the communication connection via wiring 22, which connects DC/DC converter 32 and storage battery 51, has been lost.

When determiner 11 determines that the communication connection via the communication line connecting the voltage converter and the device has not been lost (No in Step S11), the process in Step S11 is continuously performed.

When it is determined that the communication connection has been lost (Yes in Step S11), outputter 12 outputs an anomalous signal (Step S12). For example, the anomalous signal includes a signal for interrupting the supply of electric power from the voltage converter to the device. For example, when it is determined that the communication connection between DC/DC converter 32 and storage battery 51 has been lost, outputter 12 outputs, to DC/DC converter 32, a signal for interrupting the supply of electric power from DC/DC converter 32 to storage battery 51. DC/DC converter 32 receives this signal and, accordingly, interrupts the supply of electric power to storage battery 51 by controlling the semiconductor switch that turns ON and OFF the supply of electric power to storage battery 51 via wiring 22, for example. Furthermore, the anomalous signal may include a signal for reporting the anomaly to a user, a manager, or the like of solar power generation system 1; outputter 12 may use this signal to notify that there is an anomaly in wiring 22.

Note that anomaly detection device 10 may be provided in one of DC/DC converters 31, 32, 33 and inverter 34.

As described above, anomaly detection device 10 according to the present embodiment includes: determiner 11 that determines whether a communication connection via a communication line connecting a device and a voltage converter including a communication function has been lost; and outputter 12 that outputs an anomalous signal when it is determined that the communication connection has been lost.

With this, it is possible to detect an anomaly in wiring by only determining whether the communication connection has been lost. Stated differently, there is no need to provide the voltage detection means, the electric current detection means, or the like in the wiring, and an anomaly in the wiring can be easily detected.

For example, the communication line may also function as a direct-current power line connecting the voltage converter and the device.

The direct-current power line which is used to supply electric power is associated with safety, meaning that the importance of detecting an anomaly in the direct-current power line is high. This is because there is a risk that an anomaly in the direct-current power line may cause an electrical fire due to electrical leakage, a short circuit, an arc discharge, or the like. According to this aspect, it is possible to easily detect such an anomaly in the direct-current power line by determining whether the communication connection has been lost.

For example, the anomalous signal may include a signal for interrupting the supply of electric power from the voltage converter to the device.

With this, when an anomaly in the wiring is detected, the supply of electric power from the voltage converter to the device can be interrupted, and thus safety is secured.

### [Embodiment 2]

Embodiment 1 has thus far described an example where the anomaly detection device is provided in the solar power generation system, but the anomaly detection device may be provided in an indoor wiring system. This will be described with reference to FIG. 3.

FIG. 3 is a configuration diagram illustrating one example of indoor wiring system 2 according to Embodiment 2. Note that system power supply 40 connected to indoor wiring system 2 is also illustrated in FIG. 3.

System power supply 40 supplies alternating-current power generated at a power station or the like.

Indoor wiring system 2 includes AC/DC converter 30, wiring 20, light fixtures 53, 54, 55, and anomaly detection device 10. AC/DC converter 30, wiring 20, light fixtures 53, 54, 55, and anomaly detection device 10 are installed inside a facility such as a detached house, an apartment, a building, or a factory.

AC/DC converter 30 is a voltage converter that receives the alternating-current power from system power supply 40, converts the received alternating-current power into direct-current power, and outputs the direct-current power. AC/DC converter 30 outputs, to light fixtures 53, 54, 55, the direct-current power resulting from the conversion. AC/DC converter 30 includes a positive electrode and a negative electrode; a positive electrode-side direct-current power line is connected to the positive electrode, and a negative electrode-side direct-current power line is connected to the negative electrode. This positive electrode-side direct-current power line and this negative electrode-side direct-current power line are collectively referred to as wiring 20. Wiring 20 extends from AC/DC converter 30 and branches toward light fixtures 53, 54, 55, for example. The direct-current power is supplied from AC/DC converter 30 to light fixtures 53, 54, 55 through wiring 20. For example, AC/DC converter 30 includes a semiconductor switch that turns ON and OFF the supply of electric power to light fixtures 53, 54, 55 through wiring 20.

AC/DC converter 30 is one example of the voltage converter including a communication function. Each of light fixtures 53, 54, 55 is one example of the device that communicates with AC/DC converter 30. The communication connection between AC/DC converter 30 and each of light fixtures 53, 54, 55 is performed through a communication line. Wiring 20 is one example of the communication line. As described above, wiring 20 is a direct-current power line, and the communication line also functions as a direct-current power line that connects AC/DC converter 30 and each of light fixtures 53, 54, 55. For example, AC/DC converter 30 and each of light fixtures 53, 54, 55 communicate with each other by way of PLC or PoE using wiring 20 functioning as both the communication line and the direct-current power line.

Note that the device is not particularly limited to the light fixture as long as the device is provided indoors. For example, the device may be a loudspeaker, a microphone, or the like.

For example, when the electric current detection means, the voltage detection means, or the like is provided in wiring 20, an anomaly (for example, damage or rupture) in the wiring can be detected, but providing the electric current detection means, the voltage detection means, or the like leads to increased size and cost of the system.

Thus, in order to easily detect an anomaly in the wiring, anomaly detection device 10 is used in the present embodiment as well. Anomaly detection device 10 that is the same as that according to Embodiment 1 is used; the present embodiment is different from Embodiment 1 in that anomaly detection device 10 is applied to indoor wiring system 2.

For example, AC/DC converter 30 and light fixture 53 regularly transmit and receive heartbeats for confirming that the communication connection between AC/DC converter 30 and light fixture 53 is valid. Similarly, for example, AC/DC converter 30 and light fixture 54 transmit and receive heartbeats, and AC/DC converter 30 and light fixture 55 transmit and receive heartbeats. For example, when AC/DC converter 30 fails to regularly receive heartbeats from light fixture 53, 54, or 55, AC/DC converter 30 notifies anomaly detection device 10 of this failure.

The operations of determiner 11 and outputter 12 are the same as those described in Embodiment 1 and as such, description thereof will be omitted.

As described above, indoor wiring system 2 according to the present embodiment includes anomaly detection device 10, a communication line (for example, wiring 20), and a device (for example, light fixtures 53, 54, 55) provided indoors.

Thus, anomaly detection device 10 may be applied to indoor wiring system 2; it is possible to provide indoor wiring system 2 capable of easily detecting an anomaly in the wiring.

### [Other Embodiments]

The anomaly detection device, etc., according to the embodiments have been described thus far, but the present invention is not limited to the embodiments described above.

For example, the embodiments have thus far described examples where the communication line also functions as a direct-current power line connecting the voltage converter and the device, but the communication line does not need to function as a direct-current power line.

For example, the embodiments have thus far described examples where the electric current detection means or the voltage detection means is not provided in the wiring, but the electric current detection means or the voltage detection means may be provided in the wiring. After determining that the communication connection has been lost, determiner 11 may identify the type, etc., of the anomaly by analyzing the frequency components of electrical parameters (for example, an electric current or a voltage) obtained from the electric current detection means or the voltage detection means.

For example, the embodiments have thus far described examples where the anomaly detection device is applied to the solar power generation system and the indoor wiring system, but the examples of application are not limited to these examples. Other examples of application of the anomaly detection device according to the present invention (specifically, the anomaly detection device capable of easily detecting an anomaly in the wiring) will be described with reference to FIG. 4.

FIG. 4 is a diagram for describing an example of application of the anomaly detection device according to the present invention.

The anomaly detection device according to the present invention is applied to a system in which solar inverter 500 converts direct-current power supplied thereto from solar panel 310 through wiring into alternating-current power, for example. In this example of application, two or more (for example, three) sets of two or more (for example, three) solar panels 310 connected in series by a single line (string) of wiring 600 are arranged to form solar cell array 300. Two or more lines of wiring 600 are put together by junction box 400 and are connected to solar inverter 500. Wiring 600 is a communication line.

For example, circuit breaker 410 is provided for each line of wiring 600; in this example, circuit breaker 410 is provided in junction box 400. Note that circuit breaker 410 does not need to be provided in junction box 400. For example, circuit breaker 410 may be provided between junction box 400 and solar cell array 300 or may be provided between junction box 400 and solar inverter 500 instead of being provided for each line of wiring 600.

Solar panel 310 includes solar panel attachment module 320 which converts a signal to be output from solar panel 310, for example. Solar panel attachment module 320 is, for example, a DC/DC converter that optimizes the amount of electric power to be generated by each solar panel 310. Note that solar panel 310 does not need to include solar panel attachment module 320.

Solar inverter 500 includes a voltage converter (for example, DC/DC converter) and a converter (for example, inverter) that converts electric power (direct-current power) output from the voltage converter into alternating current power.

For example, solar inverter 500 may include the anomaly detection device. When it is determined that an electric arc has occurred, solar inverter 500 is stopped.

For example, circuit breaker 410 may include the anomaly detection device. When it is determined that an anomaly has occurred, circuit breaker 410 shuts off an electric current flowing through wiring 600.

Furthermore, for example, solar panel 310 or solar panel attachment module 320 may include the anomaly detection device. When it is determined that an anomaly has occurred, solar panel 310 or solar panel attachment module 320 stops the output to wiring 600.

Furthermore, for example, junction box 400 may include the anomaly detection device. When it is determined that an anomaly has occurred, junction box 400 shuts off, via circuit breaker 410 or the like, an electric current flowing through wiring 600, for example.

Note that the anomaly detection device according to the present invention can be applied to not only those cited above, but also any system in which an anomaly in wiring needs to be detected.

Thus, solar inverter 500 may include the anomaly detection device, the voltage converter, and the converter that converts the electric power output from the voltage converter. Circuit breaker 410 may include the anomaly detection device, and when it is determined that the communication connection has been lost, shut off an electric current flowing through the communication line. Solar panel 310 may include the anomaly detection device and may generate electric power using sunlight. Solar panel attachment module 320 may include the anomaly detection device and may convert a signal to be output from solar panel 310. Junction box 400 may include the anomaly detection device and may connect solar panel 310 and solar inverter 500.

Furthermore, the present invention can be implemented not only as an anomaly detection device, but also as an anomaly detection method including steps (processes) which the structural elements included in the anomaly detection device perform.

Specifically, the anomaly detection method includes: determining whether the communication connection via a communication line connecting a device and a voltage converter including a communication function has been lost (Step S11); and outputting an anomalous signal when it is determined that the communication connection has been lost (Yes in Step S11) (Step S12), as illustrated in FIG. 2.

For example, these steps may be performed by a computer (computer system). The present invention can be implemented as a program which causes the computer to perform the steps included in the method. Furthermore, the present invention can be implemented as a non-transitory, computer-readable recording medium such as compact disc read-only memory (CD-ROM) including the program recorded thereon.

For example, the anomaly detection device may be provided as software for a general-purpose computer such as a personal computer.

### [Reference Signs List]

1 solar power generation system
2 indoor wiring system
10 anomaly detection device
11 determiner
12 outputter
20, 21, 22, 23, 600 wiring
30 AC/DC converter
31, 32, 33 DC/DC converter
34 inverter
40 system power supply
41, 310 solar panel
51, 52 storage battery
53, 54, 55 light fixture
300 solar cell array
320 solar panel attachment module
400 junction box
410 circuit breaker
500 solar inverter

## Claims

1. An anomaly detection device (10) comprising:
a determiner (11) that determines whether a communication connection via a communication line connecting a device and a voltage converter including a communication function has been lost; and
an outputter (12) that outputs an anomalous signal when it is determined that the communication connection has been lost,
wherein the anomaly detection device (10) is **characterized in that**
the device and the voltage converter regularly transmit and receive heartbeats for confirming that the communication connection between the device and the voltage converter is valid, and
the determiner (11) determines that the communication connection has been lost when the voltage converter notifies of a failure to regularly receive heartbeats from the device.

2. The anomaly detection device (10) according to claim 1, wherein
the communication line also functions as a direct-current power line connecting the voltage converter and the device.

3. The anomaly detection device (10) according to claim 1 or 2, wherein
the anomalous signal includes a signal for interrupting supply of electric power from the voltage converter to the device.

4. An anomaly detection method comprising:
determining whether a communication connection via a communication line connecting a device and a voltage converter including a communication function has been lost; and
outputting an anomalous signal when it is determined that the communication connection has been lost,
wherein the method is **characterized in that**
the device and the voltage converter regularly transmit and receive heartbeats for confirming that the communication connection between the device and the voltage converter is valid, and
the determining includes determining that the communication connection has been lost when the voltage converter notifies of a failure to regularly receive heartbeats from the device.

5. A program for causing a computer to perform the anomaly detection method according to claim 4.

6. An indoor wiring system (2) comprising:
the anomaly detection device (10) according to any one of claims 1 to 3;
the communication line; and
a device provided indoors and connected to the communication line.

7. A solar inverter (500) comprising:
the anomaly detection device (10) according to any one of claims 1 to 3;
the voltage converter; and
a converter that converts electric power output from the voltage converter.

8. A circuit breaker (410) comprising:
the anomaly detection device (10) according to any one of claims 1 to 3, wherein
when it is determined that the communication connection has been lost, the circuit breaker (410) shuts off an electric current flowing through the communication line.

9. A solar panel (41, 310) comprising:
the anomaly detection device (10) according to any one of claims 1 to 3, wherein
the solar panel (41, 310) generates electric power using sunlight.

10. A solar panel (41, 310) attachment module comprising:
the anomaly detection device (10) according to any one of claims 1 to 3, wherein
the solar panel (41, 310) attachment module converts a signal output from a solar panel (41, 310).

11. A junction box comprising:
the anomaly detection device (10) according to any one of claims 1 to 3, wherein
the junction box connects a solar panel (41, 310) and a solar inverter (500).

## Patentansprüche

1. Anomalieerkennungsvorrichtung (10), aufweisend:
eine Bestimmungsvorrichtung (11), die bestimmt, ob eine Kommunikationsverbindung über eine Kommunikationsleitung, die eine Vorrichtung und einen Spannungswandler verbindet, der eine Kommunikationsfunktion aufweist, unterbrochen wurde; und
eine Ausgabevorrichtung (12), die ein Anomaliesignal ausgibt, wenn bestimmt wird, dass die Kommunikationsverbindung unterbrochen wurde,
wobei die Anomalieerkennungsvorrichtung (10) **dadurch gekennzeichnet ist, dass**
die Vorrichtung und der Spannungswandler regelmäßig Herzschläge senden und empfangen, um zu bestätigen, dass die Kommunikationsverbindung zwischen der Vorrichtung und dem Spannungswandler gültig ist, und
die Bestimmungsvorrichtung (11) bestimmt, dass die Kommunikationsverbindung unterbrochen wurde, wenn der Spannungswandler eine Störung des regelmäßigen Empfangs von Herzschlägen von der Vorrichtung meldet.

2. Anomalieerkennungsvorrichtung (10) nach Anspruch 1, wobei
die Kommunikationsleitung auch als Gleichstromleitung dient, die den Spannungswandler und die Vorrichtung verbindet.

3. Anomalieerkennungsvorrichtung (10) nach Anspruch 1 oder 2, wobei
das Anomaliesignal ein Signal zum Unterbrechen einer Stromversorgung von dem Spannungswandler zu der Vorrichtung aufweist.

4. Anomalieerkennungsverfahren, umfassend:
Bestimmen, ob eine Kommunikationsverbindung über eine Kommunikationsleitung, die eine Vorrichtung und einen Spannungswandler verbindet, der eine Kommunikationsfunktion aufweist, unterbrochen wurde; und
Ausgeben eines Anomaliesignals, wenn bestimmt wird, dass die Kommunikationsverbindung unterbrochen wurde,
wobei das Verfahren **dadurch gekennzeichnet ist, dass**
die Vorrichtung und der Spannungswandler regelmäßig Herzschläge senden und empfangen, um zu bestätigen, dass die Kommunikationsverbindung zwischen der Vorrichtung und dem Spannungswandler gültig ist, und
das Bestimmen ein Bestimmen umfasst, dass die Kommunikationsverbindung unterbrochen wurde, wenn der Spannungswandler eine Störung des regelmäßigen Empfangs von Herzschlägen von der Vorrichtung meldet.

5. Programm zum Veranlassen eines Computers, das Anomalieerkennungsverfahren nach Anspruch 4 auszuführen.

6. Innenraumverkabelungssystem (2), aufweisend:
die Anomalieerkennungsvorrichtung (10) nach einem der Ansprüche 1 bis 3;
die Kommunikationsleitung; und
eine Vorrichtung, die in Innenräumen vorgesehen ist und mit der Kommunikationsleitung verbunden ist.

7. Solarwechselrichter (500), aufweisend:
die Anomalieerkennungsvorrichtung (10) nach einem der Ansprüche 1 bis 3;
den Spannungswandler; und
einen Wandler, der elektrische Leistung, die von dem Spannungswandler ausgegeben wird, umwandelt.

8. Schaltungsunterbrecher (410), aufweisend:
die Anomalieerkennungsvorrichtung (10) nach einem der Ansprüche 1 bis 3, wobei
wenn bestimmt wird, dass die Kommunikationsverbindung unterbrochen wurde, der Schaltungsunterbrecher (410) einen elektrischen Strom, der durch die Kommunikationsleitung fließt, unterbricht.

9. Solarpaneel (41, 310), aufweisend:
die Anomalieerkennungsvorrichtung (10) nach einem der Ansprüche 1 bis 3, wobei
das Solarpaneel (41, 310) unter Verwendung von Sonnenlicht elektrische Energie erzeugt.

10. Befestigungsmodul für ein Solarpaneel (41, 310), aufweisend:
die Anomalieerkennungsvorrichtung (10) nach einem der Ansprüche 1 bis 3, wobei
das Befestigungsmodul für das Solarpaneel (41, 310) ein Signal, das von dem Solarpaneel (41, 310) ausgegeben wird, umwandelt.

11. Anschlussdose, aufweisend:
die Anomalieerkennungsvorrichtung (10) nach einem der Ansprüche 1 bis 3, wobei
die Anschlussdose ein Solarpaneel (41, 310) und einen Solarwechselrichter (500) verbindet.

## Revendications

1. Dispositif de détection d'anomalie (10) comprenant :
un module de détermination (11) qui détermine si une connexion de communication par l'intermédiaire d'une ligne de communication reliant un dispositif et un convertisseur de tension comprenant une fonction de communication a été perdue ; et
un module de fourniture en sortie (12) qui fournit en sortie un signal anormal lorsqu'il est déterminé que la connexion de communication a été perdue,
dans lequel le dispositif de détection d'anomalie (10) est **caractérisé en ce que**
le dispositif et le convertisseur de tension émettent et reçoivent régulièrement des battements de coeur pour confirmer que la connexion de communication entre le dispositif et le convertisseur de tension est valide, et
le module de détermination (11) détermine que la connexion de communication a été perdue lorsque le convertisseur de tension notifie qu'il ne reçoit pas régulièrement les battements de coeur en provenance du dispositif.

2. Dispositif de détection d'anomalie (10) selon la revendication 1, dans lequel
la ligne de communication fait également office de ligne électrique à courant continu reliant le convertisseur de tension et le dispositif.

3. Dispositif de détection d'anomalie (10) selon la revendication 1 ou 2, dans lequel
le signal anormal comprend un signal visant à interrompre la fourniture d'énergie électrique du convertisseur de tension au dispositif.

4. Procédé de détection d'anomalie comprenant le fait de :
déterminer si une connexion de communication par l'intermédiaire d'une ligne de communication reliant un dispositif et un convertisseur de tension comprenant une fonction de communication a été perdue ; et
fournir en sortie un signal anormal lorsqu'il est déterminé que la connexion de communication a été perdue,
dans lequel le procédé est **caractérisé en ce que**
le dispositif et le convertisseur de tension émettent et reçoivent régulièrement des battements de coeur pour confirmer que la connexion de communication entre le dispositif et le convertisseur de tension est valide, et
la détermination comprend le fait de déterminer que la connexion de communication a été perdue lorsque le convertisseur de tension notifie qu'il ne reçoit pas régulièrement les battements de coeur en provenance du dispositif.

5. Programme pour amener un ordinateur à mettre en œuvre le procédé de détection d'anomalie selon la revendication 4.

6. Système de câblage intérieur (2) comprenant :
le dispositif de détection d'anomalie (10) selon l'une quelconque des revendications 1 à 3 ;
la ligne de communication ; et
un dispositif installé à l'intérieur, et relié à la ligne de communication.

7. Onduleur solaire (500) comprenant :
le dispositif de détection d'anomalie (10) selon l'une quelconque des revendications 1 à 3 ;
le convertisseur de tension ; et
un convertisseur qui convertit l'énergie électrique fournie en sortie par le convertisseur de tension.

8. Disjoncteur (410) comprenant :
le dispositif de détection d'anomalie (10) selon l'une quelconque des revendications 1 à 3, dans lequel
lorsqu'il est déterminé que la connexion de communication a été perdue, le disjoncteur (410) coupe le courant électrique circulant à travers la ligne de communication.

9. Panneau solaire (41, 310) comprenant :
le dispositif de détection d'anomalie (10) selon l'une quelconque des revendications 1 à 3, dans lequel
le panneau solaire (41, 310) produit de l'énergie électrique en utilisant la lumière du soleil.

10. Module de fixation du panneau solaire (41, 310), comprenant :
le dispositif de détection d'anomalie (10) selon l'une quelconque des revendications 1 à 3, dans lequel
le module de fixation du panneau solaire (41, 310) convertit un signal fourni en sortie par un panneau solaire (41, 310).

11. Boîte de jonction comprenant :
le dispositif de détection d'anomalie (10) selon l'une quelconque des revendications 1 à 3, dans lequel
la boîte de jonction relie un panneau solaire (41, 310) et un onduleur solaire (500).
